(19) Europäisches Patentamt
European Patent Office
Office européen des brevets

(11) **EP 0 993 672 B1**

(12) **EUROPÄISCHE PATENTSCHRIFT**

(45) Veröffentlichungstag und Bekanntmachung des Hinweises auf die Patenterteilung:
**08.01.2003  Patentblatt 2003/02**

(21) Anmeldenummer: **98940141.9**

(22) Anmeldetag: **04.07.1998**

(51) Int Cl.$^7$: **G10L 19/10**

(86) Internationale Anmeldenummer:
**PCT/EP98/04144**

(87) Internationale Veröffentlichungsnummer:
**WO 99/003094 (21.01.1999 Gazette 1999/03)**

(54) **VERFAHREN ZUR CODIERUNG UND/ODER DECODIERUNG VON SPRACHSIGNALEN UNTER VERWENDUNG EINER LANGZEITPRÄDIKTION UND EINES MEHRIMPULSANREGUNGSSIGNALS**

METHOD FOR VOICE SIGNAL CODING AND/OR DECODING BY MEANS OF A LONG TERM PREDICTION AND A MULTIPULSE EXCITATION SIGNAL

PROCEDE POUR LE CODAGE ET/OU LE DECODAGE DE SIGNAUX VOCAUX A L'AIDE D'UNE PREDICTION A LONG TERME ET D'UN SIGNAL D'EXCITATION MULTI-IMPULSIONNEL

(84) Benannte Vertragsstaaten:
**AT DE FR GB IT SE**

(30) Priorität: **10.07.1997  DE 19729494**

(43) Veröffentlichungstag der Anmeldung:
**19.04.2000  Patentblatt 2000/16**

(73) Patentinhaber: **GRUNDIG Aktiengesellschaft**
**90471 Nürnberg (DE)**

(72) Erfinder: **CARL, Holger**
**D-90768 Fürth (DE)**

(74) Vertreter: **Pröll, Jürgen**
**GRUNDIG Aktiengesellschaft,**
**R-L 1, Patentabteilung,**
**Beuthener Strasse 41**
**90471 Nürnberg (DE)**

(56) Entgegenhaltungen:
EP-A- 0 578 436          US-A- 4 991 215
US-A- 5 327 520          US-A- 5 596 676

• IKEDO J ET AL: "LOW COMPLEXITY SPEECH CODER FOR PERSONAL MULTIMEDIA COMMUNICATION" 1995 FOURTH IEEE INTERNATIONAL CONFERENCE ON UNIVERSAL PERSONAL COMMUNICATIONS RECORD, GATEWAY TO THE 21ST. CENTURY TOKYO, NOV. 6 - 10, 1995, Nr. CONF. 4, 6. November 1995, Seiten 808-812, XP000690063 INSTITUTE OF ELECTRICAL AND ELECTRONICS ENGINEERS
• FULDSETH A ET AL: "PITCH PREDICTION IN A WIDEBAND CELP CODER" SIGNAL PROCESSING THEORIES AND APPLICATIONS, BRUSSELS, AUG. 24 - 27, 1992, Bd. 1, Nr. CONF. 6, 24. August 1992, Seiten 499-502, XP000348709 VANDEWALLE J;BOITE R; MOONEN M; OOSTERLINCK A
• BEROUTI M ET AL: "Efficient computation and encoding of the multipulse excitation for LPC" ICASSP 84. PROCEEDINGS OF THE IEEE INTERNATIONAL CONFERENCE ON ACOUSTICS, SPEECH AND SIGNAL PROCESSING, SAN DIEGO, CA, USA, 19-21 MARCH 1984, Seiten 10.1/1-4 vol.1, XP002083781 1984, New York, NY, USA, IEEE, USA

**Beschreibung**

Die Erfindung betrifft ein Verfahren zur Codierung und/oder Decodierung von Sprachsignalen, insbesondere für digitale Diktiergeräte.

Zur Codierung eines Sprachsignals wird dieses üblicherweise zunächst bei einer Grenzfrequenz kleiner 4 kHz tiefpaßgefiltert und das so erhaltene Signal mit einer Abtastrate von 8 kHz abgetastet. Das abgetastete Signal wird in ein digitales Sprachsignal umgewandelt, welches aus einer Folge von Sprachsignalabtastwerten besteht. Aus dieser Folge von Sprachsignalabtastwerten werden Vorhersageparameter ermittelt, die im Sprachsignalcoder und -decoder benötigt werden. Weiterhin wird für jeden Sprachsignalabtastwert unter Verwendung der genannten Vorhersageparameter und der jeweils vorhergehenden Sprachsignalabtastwerte ein Vorhersagewert berechnet. Die Differenz zwischen jedem Signalabtastwert und seinem Vorhersagewert wird quantisiert, digital codiert und zusammen mit den Vorhersageparametern moduliert einem Speichermedium zugeführt, bei dem es sich beispielsweise um ein Magnetband oder um einen RAM-Speicher handeln kann. Das vom Speichermedium wiedergegebene Signal wird nach Aufspaltung in seine einzelnen Teilsignale in einem Sprachdecoder dazu verwendet, das ursprünglich vorhandene Sprachsignal möglichst naturgetreu wiederherzustellen.

Stand der Technik, die nach den vorstehenden Grundprinzipien arbeitet, ist aus den Patentschriften US-A-4,133,976, US-A-3,631,520 und US-A-3,502,986 bekannt.

Aus EP-A- 0657874 ist ein Sprachsignalcodierer bekannt, welcher aus einem digitalisierten Sprachsignal Vorhersageparameter errechnet. Anhand eines adaptiven Codebuches ermittelt er eine Erregungssignalkomponente. Im weiteren ermittelt er aus dem Sprachsignal Mehrimpulskomponenten des Erregungssignals. Bei der Verarbeitung der Sprachsignale werden die Sprachsignale in verschiedene Zeitbereiche aufgeteilt und einzeln weiterverarbeitet.

Aus US-A-5327520 ist ein Sprachcodierer bekannt, bei welchem mittels einer rückadaptiven AGC bereits gespeicherter Codevektoren für einen Vergleich mit Eingangssprachsignalen verglichen werden. Zur Vereinfachung werden diese in Tabellen verwaltet.

Aus "Low Complexity Speech Coder for Personal Multimedia Communication", IKEDO, J. und andere, 1995 Fourth IEEE International Conference on Universal Personal Communications Record, Gateway to the 21st Century, Tokyo, 06. bis 10. November 1995, ist ein adaptives Codebuch mit Einträgen aus einem verzögerten Gesamterregungssignal bekannt. Bei diesem Codebuch werden die ersten Unterblöcke jeweils vollständig durchsucht, während in den weiteren Unterblöcken jeweils nur ein definierter Teilbereich durchsucht wird.

Aus "Efficient Computation and Encoding of the Multipulse Excitation for LPC", Berouti, M. und andere, ICASSP 84. Proceedings of the IEEE International Conference on Acoustics, Speech and Signal Processing, San Diego, USA, 19. bis 23 März 1984, Seiten 10.1/1-4, ist ein Kodierungsverfahren bekannt, bei welchem Mehrimpulserregungsvektoren anhand ihrer Impulspositionen und den dazugehörigen Amplituden kodiert werden.

Ausgehend von diesem Stand der Technik liegt der Erfindung die Aufgabe zugrunde, einen Weg aufzuzeigen, wie die Wiedergabequalität eines mittels eines digitalen Diktiergerätes aufgezeichneten Sprachsignals verbessert werden kann.

Diese Aufgabe wird, ausgehend von den Verfahrensmerkmalen des Anspruches 1 gelöst. Vorteilhafte Ausgestaltungen und Weiterbildungen sind in den abhängigen Patentansprüchen angegeben.

Die Vorteile der Erfindung bestehen darin, daß das Verfahren ohne eine Interblockcodierung arbeitet, so daß Editierfunktionen wie Einfügeaufnahmen oder eine Löschung von Teilen der aufgezeichneten Signale möglich sind.

Obwohl das beanspruchte Verfahren im Hinblick auf eine Aufzeichnung und Wiedergabe von Sprachsignalen optimiert ist, lassen sich auch andere Signale wie Musik oder beliebige Geräusche, wie zum Beispiel Stimmengemische, Fahrzeuggeräusche usw., mit zufriedenstellender Qualität aufzeichnen und wiedergeben.

Die Merkmale der Erfindung werden im folgenden exemplarisch an einem Ausführungsbeispiel erläutert. Das Ausführungsbeispiel ist keine erschöpfende Aufzählung der erfindungsgemäßen Ausgestaltungsmöglichkeiten, sondern hat nur beispielhaften Charakter. Die Merkmale der Ansprüche können einzeln oder in beliebiger Kombination miteinander benutzt werden.

Es zeigt:

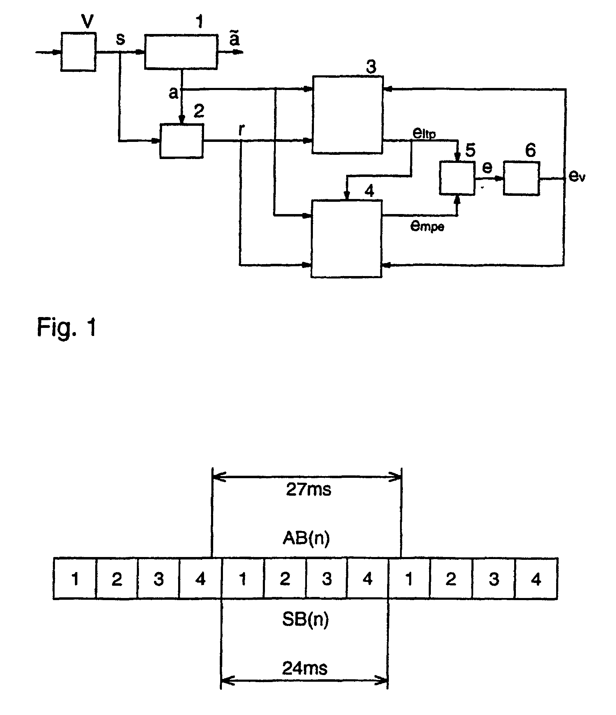

- Figur 1 ein Blockschaltbild eines Ausführungsbeispiels für einen Sprachsignalcoder für ein digitales Diktiergerät,

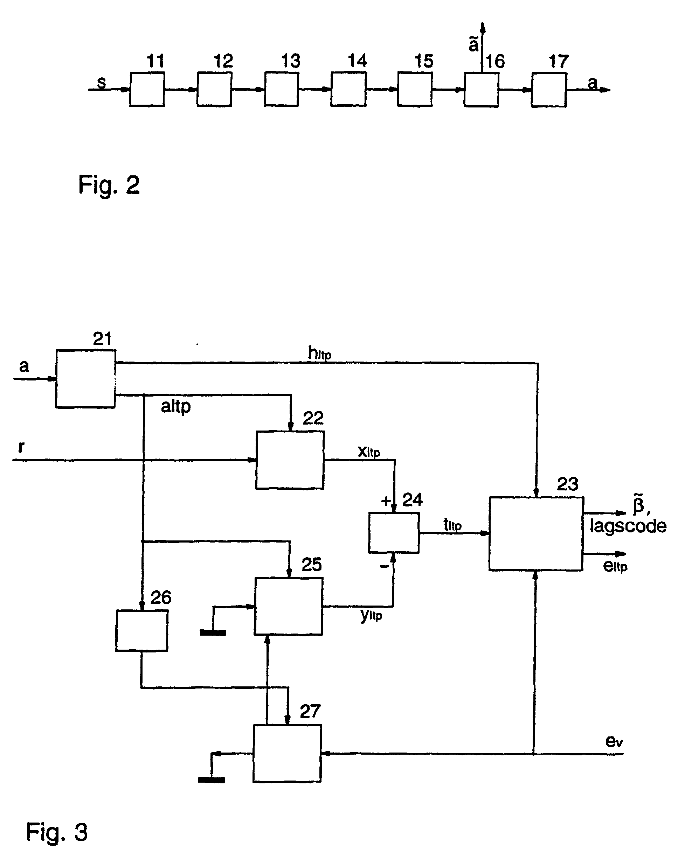

- Figur 2 ein Detailblockschaltbild des Schaltungsblocks 1 von Figur 1 zur Erläuterung der LPC-Analyse,

- Figur 3 ein Detailblockschaltbild des Schaltungsblocks 3 von Figur 1 zur Erläuterung der LTP-Analyse,

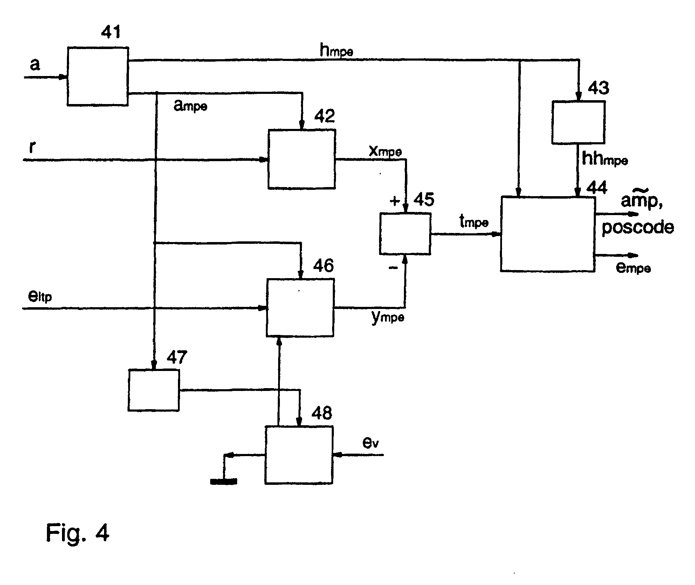

- Figur 4 ein Detailblockschaltbild des Schaltungsblocks 4 von Figur 1 zur Erläuterung der Erzeugung von Impulsparametern,

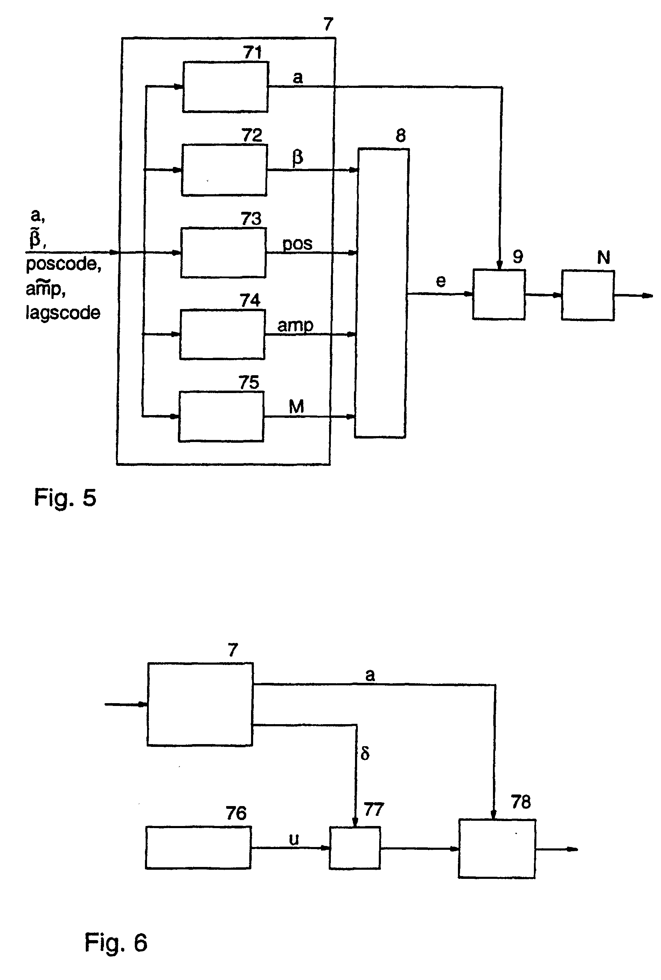

- Figur 5 ein Blockschaltbild eines Ausführungsbeispiels für einen Sprachsignaldecoder für ein digitales Diktiergerät, und

- Figur 6 ein Blockschaltbild eines Decoders für Blöcke ohne Sprachsignal.

Das Verfahren arbeitet wie folgt:

Ein digitales Sprachsignal wird nach einer Vorverarbeitung blockweise weiter verarbeitet. Zunächst wird das vorverarbeitete digitale Sprachsignal s einer LPC-Analyse (LPC = linear-prädiktive Codierung) unterzogen, in der aus dem digitalen Sprachsignal LPC-Parameter a ermittelt werden. Diese werden in einer

Inversfilterung für die Erzeugung eines LPC-Restsignals r aus dem digitalen Sprachsignal s benutzt. Auf der Grundlage der LPC-Parameter a und des LPC-Restsignals r werden eine LTP-Analyse, eine sogenannte Langzeitprädiktionsanalyse, sowie eine Impulsparametererzeugung durchgeführt. In alternativen Ausführungsformen kann das Sprachsignal s auch ungefiltert oder nach einer anderen als der genannten Inversfilterung der LTP-Analyse und/oder der Impulsparametererzeugung zugeführt werden.

Der LTP-Analyse und der Impulsparametererzeugung wird zusätzlich zum Restsignal r und den LPC-Paramtern a das um einen Unterblock verzögerte Gesamterregungssignal $e_v$ zugeleitet. Als Ergebnis der LTP-Analyse erhält man Parameter, die einen Erregungsvektor $e_{ltp}$ definieren, als Ergebnis der Impulserzeugung erhält man Parameter, die den Erregunsvektor $e_{mpe}$ bestimmen.

Die Erregungsvektoren $e_{mpe}$, und $e_{ltp}$ werden erzeugt und addiert. Hierdurch wird das Gesamterregungssignal e erhalten. Dieses Gesamterregungssignal e wird anschließend um einen Unterblock verzögert, wodurch sich das um einen Unterblock verzögerte Gesamterregungssignal $e_v$ ergibt.

Das Eingangssignal ist ein digitales Sprachsignal mit einer Abtastrate von 12 kHz. Dieses Signal wird zunächst hochpaßgefiltert, wobei der Hochpaß eine (untere) Grenzfrequenz von 50 Hz aufweist. Dadurch wird das digitale Sprachsignal von seinen Gleichanteilen und den niedrigfrequenten Anteilen befreit, welche einen störenden Einfluß auf die nachfolgende Analyse haben könnten. Die Übertragungsfunktion des Hochpaßfilters lautet

$$H(z) = \frac{z-1}{z-0.99} \ .$$

Außerdem wird das digitale Signal einer Preemphase unterworfen, die ein FIR-Filter 1.Ordnung mit einer Übertragungsfunktion

$$E(z) = z - 0.1$$

verwendet. Diese Preemphase bewirkt eine leichte Höhenanhebung von ca. 1 bis 1.5 dB.

Danach wird eine Blockbildung vorgenommen. Bei dieser Blockbildung erfolgt eine Segmentierung des Signals in einander überlappende Analyseblöcke von jeweils 324 Abtastwerten, also jeweils 27 ms Dauer. Die jeweilige Überlappung benachbarter Blöcke entspricht einer Dauer von 3 ms. Jeder der in den Analyseblöcken zentriert liegenden Syntheseblöcke von 24 ms Dauer besteht aus vier Unterblöcken von je 6 ms Dauer, wobei die weiter unten beschriebene LTP-Analyse und die Impulsparametererzeugung für jeden Unterblock erfolgen, d.h. viermal pro Block.

Die LPC-Analyse kann beispielsweise gemäß der folgenden Beschreibung durchgeführt werden. Zunächst wird jeder Analyseblock einer Trapezfensterung unterzogen. Das Fenster ist wie folgt definiert:

$$w(n) = \begin{cases} \dfrac{n+1}{14} & 0 \leq n < 14 \\ 1 & 14 \leq n < 310 \\ \dfrac{324-n}{14} & 310 \leq n < 324 \end{cases}$$

Im nächsten Schritt wird eine Autokorrelationssequenz gemäß folgender Gleichung berechnet:

$$\varphi_{xx}(n) = \sum_{i=0}^{323-n} s_w(i) \cdot s_w(i+n) \qquad (0 \le n \le 14) \quad,$$

wobei $s_w(n)$ ein gefenstertes Eingangssegment darstellt. Der erste Wert $\varphi_{xx}(0)$ der Autokorrelationssequenz wird nachfolgend durch Multiplikation mit einem Faktor von 1.0004 erhöht, um die nachfolgenden Berechnungen numerisch günstiger zu gestalten.

Aus der hieraus resultierenden Autokorrelationssequenz werden durch Lösen des linearen Gleichungssystems

$$\begin{bmatrix} \varphi_{xx}(0) & \varphi_{xx}(1) & \cdots & \varphi_{xx}(13) \\ \varphi_{xx}(1) & \varphi_{xx}(0) & \cdots & \varphi_{xx}(12) \\ \vdots & \vdots & \ddots & \vdots \\ \varphi_{xx}(13) & \varphi_{xx}(12) & \cdots & \varphi_{xx}(0) \end{bmatrix} \cdot \begin{bmatrix} a''_1 \\ a''_2 \\ \vdots \\ a''_{14} \end{bmatrix} = - \begin{bmatrix} \varphi_{xx}(1) \\ \varphi_{xx}(2) \\ \vdots \\ \varphi_{xx}(14) \end{bmatrix}$$

beispielsweise mittels des rekursiven Durbin-Levinson-Algorithmus und durch Setzen von $a''_0 = 1$ die LPC-Vorhersageparameter berechnet.

Diese LPC-Vorhersageparameter werden einer Bandbreitenerweiterung um 20 Hz unterworfen, wobei die Beziehung

$$a'_i = a''_i \cdot \gamma_{bwe}{}^i \qquad (0 \le i \le 14)$$

mit

$$\gamma_{bwe} = e^{-\pi \frac{20Hz}{12000Hz}}$$

auf die LPC-Parameter angewendet wird. Durch diese Bandbreitenerweiterung werden die Formanten im LPC-Spektrum verbreitert, so daß die Wiedergabe des decodierten Sprachsignals weicher und angenehmer klingt.

Die bisher beschriebene Vorverarbeitung sorgt für eine effiziente Ermittlung von LPC-Parametern, welche eine effektive Signalkompression ermöglichen. Die weitere Signalverarbeitung bewirkt eine verbesserte Quantisierung der LPC-Parameter, die wiederum zu einer originalgetreueren Wiedergabe des Sprachsignals führt.

Im nächsten Schritt werden die modifizierten LPC-Vorhersageparameter in Reflexionskoeffizienten umgerechnet. Dies erfolgt gemäß der Rekursionsvorschrift:

$$k'_{14} = a'^{(14)}_{14}$$

$$\text{für } m = 14, ..., 2: \quad a'^{(m-1)}_i = \frac{a'^{(m)}_i + k'_m \, a'^{(m)}_{m-i}}{1 - k'^2_m} \quad (1 \le i \le m-1),$$

$$k'_{m-1} = a'^{(m-1)}_{m-1} \qquad .$$

Schließlich werden die Reflexionskoeffizienten unter Verwendung von 14 Skalarquantisierern mit insgesamt 52 Bits quantisiert, wobei für die Koeffizienten $k_0'$ bis $k_{13}'$ 5,5,4,4,4,4,4,4,3,3,3,3,3 bzw. 3 Bits verwendet werden. Die Quantisierung erfolgt unter Verwendung von abgespeicherten Tabellen, welche Werte für die Reflexionskoeffizienten enthalten, wobei die Quantisierung beispielsweise durch einfache Minimierung des euklidischen Abstandes erfolgen kann. Diese Quantisierung führt zu einem Satz von 14 quantisierten Reflexionskoeffizienten $k_i$ mit $0 \leq i \leq 13$.

Nach dieser Quantisierung werden die LPC-Parameter nach folgender Rekursionsformel berechnet:

$$a_0^{(l)} = 1 \qquad (0 \leq l \leq 14);$$

$$\text{für } m = 1, ..., 14: \quad a_i^{(m)} = a_i^{(m-1)} + k_m \, a_{m-i}^{(m-1)} \quad (1 \leq i \leq m-1),$$

$$a_m^{(m)} = k_m \qquad .$$

Die LPC-Parameter a werden als Ergebnis der LPC-Analyse als Eingangsgrößen für die LTP-Analyse und die Impulsparametererzeugung verwendet. Bei der Skalarquantisierung werden die Koeffizienten ã errechnet, die relative Adressen im jeweiligen Reflexionskoeffizientenspeicher darstellen. Diese Speicheradressen ã werden zusammen mit den weiteren codierten Größen gespeichert und wiedergabeseitig bei der Sprachdecodierung zur Regenerierung des Sprachsignals verwendet. Dabei werden pro Block insgesamt 14 LPC-Parameter a bzw. 14 Adressen ã ermittelt.

Die LTP-Analyse erfolgt folgendermaßen:

Als Eingangssignale werden der LTP-Analyse neben den durch die LPC-Analyse ermittelten LPC-Parametern a ein LPC-Restsignal $r(n)$ $(0 \leq n \leq 71)$ sowie das verzögerte Gesamtanregungssignal $e_v$ zugeführt. Das LPC-Restsignal $r(n)$ ist jeweils einem Unterblock zugeordnet und wird dadurch ermittelt, daß das anliegende digitale Sprachsignal s durch das LPC-Inversfilter

$$A(z) = \sum_{i=0}^{14} a_i \cdot z^{-i}$$

geführt wird. Zu diesem Zweck werden der Inversfilterung auch die im Rahmen der LPC-Analyse ermittelten LPC-Parameter a zugeführt.

Die LPC-Parameter a werden mit einem Gewichtungsfaktor $\gamma_{ltp} = 0.7$ gewichtet:

$$a_i^{(ltp)} = a_i \cdot \gamma_{ltp}^{\,i} \qquad (0 \leq i \leq 14).$$

Die derart gewichteten LPC-Parameter werden verwendet, um die ersten 36 Abtastwerte der Impulsantwort

$$h^{(ltp)}_{(n)} \qquad (0 \leq n \leq 35)$$

des Filters

$$\frac{1}{\sum_{i=0}^{14} a_i^{(ltp)} z^{-i}} = \frac{1}{A\left(\dfrac{z}{\gamma_{ltp}}\right)}$$

zu berechnen. Dabei erfolgt die Berechnung der gewichteten LPC-Parameter $_i^{(ltp)}$ und der Impulsantwort $h^{(ltp)}(n)$ einmal pro Block, während die weiteren Berechnungen jeweils für jeden Unterblock einzeln erfolgen.

Aus dem LPC-Restsignal $r(n)$ wird mittels des Filters

$$\frac{1}{A\left(\dfrac{z}{\gamma_{ltp}}\right)}$$

ein gewichtetes Eingangssignal

$$x_{ltp}(n) \qquad (0 \le n \le 71)$$

ermittelt.

Der Zielvektor für eine Suche im adaptiven Codebuch

$$t_{ltp}(n) \qquad (0 \le n \le 71)$$

wird durch Subtraktion eines Signals

$$y_{ltp}(n) \qquad (0 \le n \le 71)$$

vom Signal $x_{ltp}(n)$ erhalten. Das Signal $y_{ltp}(n)$ wird ebenfalls aus einem Filter mit der Übertragungsfunktion

$$\frac{1}{A\left(\dfrac{z}{\gamma_{ltp}}\right)}$$

erhalten, welches mit einem Nullsignal beaufschlagt wird und welchem weiterhin die gewichteten LPC-Parameter $a_{ltp}$ zugeführt werden. Die Filterzustandsgrößen sind hierbei vor jeder Unterblockfilterung auf die Werte zu setzen, die ein mit dem Gesamterregungssignal e beaufschlagtes Filter

$$\frac{1}{A\left(\dfrac{z}{\gamma_{ltp}}\right)}$$

am Ende des jeweils vorhergehenden Unterblocks aufwies.

Die Suche im adaptiven Codebuch erstreckt sich über Codeworte von je 72 Abtastwerten Länge, welche aus den vergangenen 186 Gesamterregungssignalabtastwerten $e(n)$ mit $-186 \le n \le -1$ nach folgendem Schema gebildet werden:

$$c_m(n) = e(-\lambda m + n) \qquad (0 \le n \le 71)$$

Dabei gilt:

$$36 \le m_{min} \le m \le m_{max} \le 186, \quad \lambda = \begin{cases} 1 & \text{wenn } m > n \\ 2 & \text{wenn } m \le n \end{cases}$$

Bei der Suche im adaptiven Codebuch werden nur ganzzahlige Verzögerungen m in Betracht gezogen. Die Suche im adaptiven Codebuch erfolgt nur im ersten Unterblock jedes Blockes über den vollen Bereich von 151 Verzögerungen, In den weiteren Unterblöcken jedes Blockes wird jeweils nur ein reduzierter Bereich von 48 Verzögerungen durchsucht. Dieser Bereich ist von der im vorherigen Unterblock ermittelten Verzögerung abhängig und wird durch die folgende Gleichung festgelegt:

$$m_{min} = \begin{cases} 36 & \text{in Unterblock 1} \\ MAX(59, M_{prev}) - 23 & \text{in Unterblock 2, 3, und 4} \end{cases} ,$$

$$m_{max} = \begin{cases} 186 & \text{in Unterblock 1} \\ MIN(162, M_{prev}) + 24 & \text{in Unterblock 2, 3, und 4} \end{cases} .$$

Dabei ist $M_{prev}$ die aus der LTP-Analyse des jeweils vorherigen Unterblockes resultierende Verzögerung.

Die Auswahl der besten Verzögerung M erfolgt durch die Bestimmung von

$$C_M = \underset{m_{min} \leq m \leq m_{max}}{MAX} \left( C_m = \frac{cross(m)}{\sqrt{energy(m)}} \right) .$$

Dabei gilt:

$$cross(m) = \sum_{n=0}^{71} t_{lpc}(n) \cdot f_m(n) \quad \text{und} \quad energy(m) = \sum_{n=0}^{71} f_m(n)^2 ,$$

$f_m(n)$ ist die Antwort des FIR-Filters, das definiert ist durch die Impulsantwort $h^{(ltp)}(n)$, auf das Codewort $c_m(n)$, wobei von gelöschten Zustandsspeichern dieses Filters auszugehen ist.

Nach Bestimmung der optimalen Verzögerung M wird der zugehörige optimale Verstärkungsfaktor nach der Gleichung

$$\beta' = \frac{cross(M)}{energy(M)} .$$

berechnet. Dieser Verstärkungsfaktor wird anschließend mit einem 5-Bit-Linearquantisierer zum Beispiel unter Verwendung einer abgespeicherten Tabelle quantisiert. Der resultierende quantisierte Verstärkungsfaktor $\beta$ wird zur Berechnung der aus dem adaptiven Codebuch gewonnenen Komponente des Erregungsvektors für den aktuellen Unterblock gemäß folgender Gleichung verwendet:

$$e_{ltp}(n) = \beta \cdot c_M(n) \qquad (0 \leq n \leq 71)$$

Die in den vier Unterblöcken erhaltenen Verzögerungen werden unter Verwendung von insgesamt 24 Bits wie folgt codiert: Unter der Annahme, daß $M_s$ die Verzögerung des Unterblocks s ($1 \leq s \leq 4$) angibt, wird der 24-Bit-Verzögerungscode nach folgender Gleichung berechnet:

$$lagscode = \{\{\{(M_4 - m_{min}(4))48 + (M_3 - m_{min}(3))\}48 + (M_2 - m_{min}(2))\}151 + (M_1 - 36).$$

Dabei bezeichnet $m_{min}(s)$ die untere Grenze des Suchbereiches für die Verzögerung im Unterblock s.

Gemäß der beschriebenen Methode wird im Rahmen der LTP-Analyse für jeden Unterblock ein Signal $e_{ltp}(n)$ ermittelt, welches die aus dem adaptiven Codebuch gewonnene Komponente des Erregungsvektors für den aktuellen Unterblock darstellt. Weiterhin werden für jeden Block ein Verzögerungscode lagscode sowie 4 Quantisierungsindizes $\tilde{\beta}$ für die Verstärkungsfaktoren ermittelt, die jeweils Adressen in einem zugehörigen Tabellenspeicher entsprechen, in welchem Werte für die Verstärkungsfaktoren $\beta$ abgespeichert sind. Diese Koeffizienten lagscode und $\tilde{\beta}$ werden zusammen mit den weiteren codierten Größen aufgezeichnet und wiedergabeseitig bei der Sprachdecodierung zur Regenerierung des Sprachsignals verwendet.

Im weiteren wird nun näher die Impulsparametererzeugung erläutert.

Die Impulsparametererzeugung verwendet neben den in der LPC-Analyse ermittelten LPC-Parametern a das LPC-Restsignal $r(n)$, das verzögerte Gesamtanregungssignal $e_v$ sowie die in der LTP-Analyse bestimmte Gesamtanregungssignalkomponente $e_{ltp}$.

Die LPC-Parameter a werden mit einem Gewichtungsfaktor $\gamma_{mpe} = 0.9$ gewichtet:

$$a_i^{(mpe)} = a_i \cdot \gamma_{mpe}^{i} \qquad (0 \le i \le 14)$$

Die derart gewichteten LPC-Parameter werden verwendet, um die ersten 42 Abtastwerte der Impulsantwort

$$h^{(mpe)}(n) \qquad (0 \le n \le 41)$$

des Filters

$$\frac{1}{\sum_{i=0}^{14} a_i^{(mpe)} z^{-i}} = \frac{1}{A\left(\dfrac{z}{\gamma_{mpe}}\right)}$$

zu berechnen. Auch hier, wie schon bei der LTP-Analyse, erfolgt die Berechnung der gewichteten LPC-Parameter $a_i^{(mpe)}$ und der Impulsantwort $h^{(mpe)}(n)$ einmal pro Block. Zusätzlich wird hier aus der Impulsantwort $h^{(mpe)}(n)$ eine Autokorrelationssequenz gemäß folgender Gleichung ermittelt:

$$hh^{(mpe)}(n) = \begin{cases} \sum_{i=0}^{42-n} h^{(mpe)}(i) \cdot h^{(mpe)}(i+n) & 0 \le n < 42 \\ 0 & 42 \le n < 72 \end{cases}.$$

Die weiteren Berechnungen erfolgen jeweils für jeden Unterblock einzeln.

Die Berechnung eines Zielvektors

$$t_{mpe}(n) = x_{mpe}(n) - y_{mpe}(n) \qquad (0 \le n \le 71)$$

erfolgt prinzipiell unter Verwendung desselben Berechnungsschemas wie die Berechnung des Zielvektors $t_{ltp}$ bei der LTP-Analyse. Auch hier wird eine gewichtete Version $x_{mpe}(n)$ des Eingangssignal durch Filterung des LPC-Restsignals in

$$\frac{1}{A\left(\dfrac{z}{\gamma_{mpe}}\right)}$$

erzeugt. Weiterhin wird ein Signal $y_{mpe}(n)$ durch Filterung - hier nicht eines Nullsignals, sondern - der Erregungssignalkomponente aus dem adaptiven Codebuch $e_{ltp}$ in einem Filter

$$\frac{1}{A\left(\dfrac{z}{\gamma_{mpe}}\right)}$$

erhalten, dessen Zustandsgrößen vor jeder Unterblockfilterung auf die Werte gesetzt werden, die ein mit dem Gesamterregungssignal e beaufschlagtes Filter

$$\frac{1}{A\left(\dfrac{z}{\gamma_{mpe}}\right)}$$

am Ende des vorangegangenen Unterblocks aufwies.

Die Ermittlung der Impulsparameter erfolgt unter Verwendung der Impulsantwort $h^{(mpe)}(n)$, der Autokorrelationssequenz $hh^{(mpe)}(n)$ und des Zielvektors $t_{mpe}(n)$. Diese Impulsparameter geben diejenigen 7 Positionen im jeweiligen Unterblock an, an denen Anregungsimpulse stehen müssen, und umfassen weiterhin Informationen über die Impulsamplituden.

Dazu wird zunächst ein Vektor th(n) nach folgender Gleichung ermittelt:

$$th(n) = \sum_{i=n}^{MIN(71,n+42)} t_{mpe}(i+n) \cdot h^{(mpe)}(i) \qquad (0 \leq n \leq 71) \quad .$$

Die erste Impulsposition ist dann gegeben durch

$$p_1 = N \quad mit \quad |th(N)| = \underset{0 \leq n \leq 71}{MAX}\left(|th(n)|\right) \qquad .$$

Der bestimmte th-Wert wird dann in

$$d_0 = th(N)$$

gespeichert, dem ersten Element einer Vektorvariable der Länge 7.
Die zweite Impulsposition wird wie folgt ermittelt:

$$m_{n,0} = \frac{hh^{(mpe)}(|n\text{-}N|)}{hh^{(mpe)}(0)} \qquad (0 \leq n \leq 71)$$

$$th(n) = th(n) - m_{n,0} \cdot d_0 \qquad (0 \leq n \leq 71)$$

$$p_2 = N \quad mit \quad |th(N)| = \underset{n \in \left\{\substack{\{0,\,...,\,p_1-1\} \cup \\ \{p_1+1,\,...,\,71\}}\right\}}{MAX}\left(|th(n)|\right)$$

$$d_1 = th(N) \; .$$

Dabei ist $m_{\mu,\nu}$ eine $72 \times 6$ - Matrixvariable.

Die verbleibenden fünf Impulspositionen werden wie folgt in einer Schleife ermittelt:

$$j = 1$$

solange j < 6:

$$m_{n,j} = \frac{hh^{(mpe)}(|n - N|)}{hh^{(mpe)}(0)} - \sum_{i=0}^{j-1} m_{n,i} \cdot m_{N,i} \qquad (0 \le n \le 71)$$

$$th(n) = th(n) - m_{n,j} \cdot d_j$$

$$p_{j+2} = N \quad \text{mit} \quad |th(N)| = \underset{n \in \left\{ n \left| \begin{array}{l} 0 \le n \le 71 \wedge \\ n \ne p_1, \dots, p_{j+1} \end{array} \right. \right\}}{\text{MAX}} \left( |th(n)| \right)$$

$$d_{j+1} = th(N)$$

$$j = j + 1$$

Sind auf die beschriebene Weise alle sieben Impulspositionen ermittelt worden, dann werden die zugehörigen Impulsamplituden $b_j$ ($1 \le j \le 7$) unter Anwendung folgender rekursiver Beziehung erhalten:

$$b_7 = \frac{d_6}{hh^{(mpe)}(0)}$$

$$j = 5$$

solange $j \ge 0$:

$$b_{j+1} = \frac{d_j}{hh^{(mpe)}(0)} - \sum_{i=j+1}^{6} m_{p_i,j} \cdot b_{i+1}$$

$$j = j - 1 \; .$$

Die 7 auf diese Weise ermittelten Parameterpaare $[p_j, b_j]$, jeweils Impulsposition und Impulsamplitude, werden derart umsortiert, daß die Werte für die Imputspositionen der letztendlich erhaltenen Impulsparameterpaare $[pos_j, amp'_j]$ in absteigender Folge vorliegen, d.h.

$$72 > pos_1 > pos_2 > pos_3 > pos_4 > pos_5 > pos_6 > pos_7 \geq 0 \ .$$

Dieses Umsortieren wird für die nachfolgende Positionscodierung benötigt, die zu einem Positionscode mit 31 Bits führt, welcher sich als Summe von Binominalkoeffizienten berechnet:

$$poscode = \sum_{i=1}^{7} \binom{pos_i}{8-i} \ .$$

Die Impulsamplituden amp' werden wie folgt quantisiert: Das Blockmaximum, das Betragsmaximum der 7 Impulsamplituden, wird beispielsweise unter Verwendung einer abgespeicherten Tabelle mit 6 Bits nichtlinear quantisiert, und anschließend werden die Impulsamplituden auf das quantisierte Blockmaximum normalisiert und danach, beispielsweise unter Verwendung einer weiteren Tabelle, einer 3-Bit-Linearquantisierung unterworfen.

Die resultierenden denormalisierten quantisierten Impulsamplituden amp werden schließlich zur Bildung eines Impulserregungsvektors gemäß folgender Beziehung verwendet:

$$e_{mpe}(n) = \begin{cases} amp_j & n = pos_j \ (1 \leq j \leq 7) \\ 0 & sonst \end{cases} \qquad (0 \leq n \leq 71) \ .$$

Gemäß der beschriebenen Methode wird im Rahmen der Impulsparametererzeugung ein Signal $e_{mpe}(n)$ ermittelt, ein Anregungsvektor, gebildet mit Hilfe der Impulsparameter für den aktuellen Unterblock. Weiterhin werden der Positionencode poscode sowie Koeffizienten $a\tilde{m}p$ erzeugt, welche aus der Amplituden-Quantisierung hervorgehen und aus 8 Indizes bestehen, da zusätzlich zu den 7 Amplituden das Blockmaximum quantisiert wird. Diese Koeffizienten werden zusammen mit den weiteren codierten Größen aufgezeichnet und wiedergabeseitig im Sprachdecoder zur Regenerierung des Sprachsignals verwendet. Die Ermittlung dieser Impulsparameter-Koeffizienten poscode und $a\tilde{m}p$ erfolgt viermal pro Block, d.h. einmal pro Unterblock.

Im weiteren wird ein Verfahren zur Sprachsignaldecodierung beschrieben.

Ein Multiplexsignal, welches die übertragenen bzw. aufgezeichneten codierten Größen $\tilde{a}$, lagscode, $\tilde{\beta}$, poscode und $a\tilde{m}p$ beinhaltet, wird zur Sprachsignaldecodierung herangezogen. Für jeden Block erfolgt unter Verwendung der Koeffizienten $\tilde{a}$ und einer zugehörigen Tabelle eine Ermittlung von 14 LPC-Parametern a. Weiterhin werden für jeden Unterblock die weiteren Parameter M, β, pos und amp regeneriert, wobei die LTP-Verzögerungen für die vier Unterblöcke eines Blocks, $M_1$ bis $M_4$, aus dem 24-Bit-Wert lagscode wie folgt ermittelt werden:

$$code = lagscode$$

$$aux = \left\lfloor \frac{code}{151} \right\rfloor$$

$$M_1 = (code - 151 \cdot aux) + 36$$

$$s = 2$$

solange $s \leq 4$:

$$code = aux$$

$$aux = \left\lfloor \frac{code}{48} \right\rfloor$$

$$M_S = (code - 48 \cdot aux) + m_{min}(s).$$

Dabei ist $m_{min}(s)$ die untere Grenze des Suchbereiches für die Verzögerung in jedem der Unterblöcke und $\lfloor x \rfloor$ bezeichnet die größte ganze Zahl, die nicht größer ist als x.

Der mit 5 Bits codierte LTP-Verstärkungswert β eines Unterblocks wird beispielsweise mittels eines Tabellenspeichers ermittelt.

Die 7 Impulspositionen $pos_j$ ($1 \leq j \leq 7$) eines Unterblocks werden aus dem 31 Bits langen Positionscode poscode durch Anwendung des folgenden Berechnungsschemas gewonnen:

$$code = poscode$$

$$n = 71$$

$$j = 7$$

solange j > 0:

$$\text{solange} \quad code < \binom{n}{j}: \quad n = n - 1$$

$$pos_{8-j} = n$$

$$code = code - \binom{n}{j}$$

$$j = j - 1 \, .$$

Die Impulsamplituden $amp_j$ ($1 \leq j \leq 7$) eines Unterblocks werden schließlich aus den a $\tilde{m}$ p dadurch erhalten, daß zunächst das mit 6 Bits codierte Blockmaximum, beispielsweise anhand einer zugehörigen Quantisierungstabelle, decodiert wird und danach die sieben normalisierten Amplituden decodiert werden. Schließlich werden die decodierten Impulsamplituden amp jeweils als Produkt des decodierten Blockmaximums und der decodierten normalisierten Amplitude ermittelt.

Aus den für jeden Unterblock ermittelten Werten für M, β, pos und amp wird im nächsten Schritt ein Erregungssignal berechnet. Diese Berechnung erfolgt für jeden der Unterblöcke, d.h. viermal pro Block.

Zunächst wird die aus dem adaptiven Codebuch gewonnene Komponente wie folgt berechnet:

$$e_{ltp}(n) = \beta \cdot c_M(n) \qquad (0 \leq n \leq 71) \, ,$$

wobei $c_M(n)$ der Eintrag des adaptiven Codebuchs ist, welcher zur Verzögerung M gehört.

Danach wird ein Impulsanregungsvektor

$$e_{mpe}(n) = \begin{cases} amp_j & n = pos_j \ (1 \leq j \leq 7) \\ \\ 0 & sonst \end{cases} \qquad (0 \leq n \leq 71)$$

ermittelt, so daß sich das Anregungssignal e(n) ergibt zu

$$e(n) = e_{ltp}(n) + e_{mpe}(n) \qquad (0 \leq n \leq 71)$$

Das Ausgangssprachsignal wird aus dem durch die LPC-Parameter a bestimmten LPC-Synthesefilter

$$\frac{1}{A(z)} = \frac{1}{\displaystyle\sum_{i=0}^{14} a_i \cdot z^{-i}}$$

erhalten, das mit dem Gesamterregungssignal e(n) beaufschlagt wird.

Schließlich erfolgt in einer Nachverarbeitungsstufe durch eine Deemphase eine Absenkung der aufzeichnungsseitig angehobenen höheren Frequenzen des Sprachsignals in einem Filter mit der Übertragungsfunktion:

$$D(z) = \frac{z}{z - 0.1}$$

Darüber hinaus kann durch eine feste oder adaptive Nachfilterung der subjektive Qualitätseindruck des derart rekonstruierten Sprachsignals beeinflußt werden.

Gemäß einer vorteilhaften Weiterbildung der Erfindung ist die Bitrate des vorstehend beschriebenen Verfahrens variabel, so daß im allgemeinen bei geringem Umgebungsgeräuschpegel die effektive, d. h. die mittlere Bitrate reduziert werden kann. Bei dieser Weiterbildung ist ein Sprachaktivitätsdetektor vorgesehen, der das Eingangssignal auf das Auftreten von Sprachpausen überwacht. Das während dieser Sprachpausen vorliegende Signal kann mit niedrigerer Qualität übertragen bzw. gespeichert werden, so daß das Signal für die Dauer der Sprachpausen mit wesentlich niedrigerer Bitrate codiert werden kann als beim Vorhandensein von Sprache.

Zur Realisierung des Sprachaktivitätsdetektors wird die Signalenergie ausgewertet. Die Leistung des Eingangssignals für den jeweiligen Syntheseblock ergibt sich zu

$$P = \frac{1}{288} \sum_{n=0}^{287} s(n)^2 \quad .$$

Dieser Leistungswert wird mit einem adaptiven Schwellenwert Thr verglichen, der wie folgt ermittelt wird:

Ein Schätzwert $P_n$ für die Rauschleistung wird Block für Block gemäß der Beziehung

$$P_n = 1.015625 \ P_n$$

vergrößert, solange er nicht größer ist als die Signalenergie P des gegenwärtigen Blocks. Ist diese Bedingung nicht mehr erfüllt, dann wird dieser Schätzwert rückgesetzt zu

$$P_n = P.$$

Nach dieser Aktualisierung von $P_n$ wird ein eventuell außerhalb des Bereiches

$$2^7 \leq P_n \leq 2^{18}$$

liegendes Ergebnis auf die über- bzw. unterschrittene Grenze gesetzt.
Die Initialisierung des Schätzwerts für die Rauschleistung sollte zu

$$P_n = 128$$

erfolgen, um zu verhindern, daß Sprachsignale mit niedrigem Pegel während der Schwellenwert-Einschwingphase als Sprachpause interpretiert werden. Um diese Schweiienwert-Einschwingphase kurz zu halten, wird die minimale Leistung $P_{min}$ des Eingangssignals, die während der Verarbeitung der ersten 50 Blöcke auftritt, ermittelt. Nach diesen ersten 50 Blöcken wird - solange keine Sprachpause erkannt wird - der Schätzwert für die Rauschleistung gemäß der Beziehung

$$P_n = 1.046875 \, P_n$$

erhöht, wenn $P_{min}$ größer als $P_n$ ist.

Auf der Grundlage dieses Schätzwertes für die Geräuschleistung wird ein Entscheidungsschwellenwert wie folgt berechnet:

$$Thr = -2^{-17} \, P_n^{\,2} + 5 \, P_n$$

Danach erfolgt für den momentanen Block eine vorläufige Entscheidung darüber, ob eine Sprachpause vorliegt:

$$SA_0 = 1 \text{ für } P \geq Thr$$

$$SA_0 = 0 \text{ für } P < Thr \, .$$

Die letztendliche Entscheidung darüber, ob eine Sprachpause vorliegt, wird getroffen gemäß der Beziehung

$$SA = SA_{-5} \vee SA_{-4} \vee SA_{-3} \vee SA_{-2} \vee SA_{-1} \vee SA_0 \, .$$

Dies bedeutet, daß der gegenwärtige Block nur dann als ein Block ohne Sprachsignal klassifiziert wird, wenn im gegenwärtigen und in den letzten 5 Blöcken die ermittelte Signalleistung unter dem Schwellenwert liegt.

Blöcke ohne Sprachsignale werden als spektral gefärbtes Rauschen modelliert. Für diese Blöcke werden zusätzlich zu einem Sprachaktivitätsbit, das dann Null ist, die LPC-Koeffizienten und ein Verstärkungsfaktor pro Unterblock abgespeichert. Die LPC-Analyse und die Codierung/Decodierung der Reflexionskoeffizienten erfolgt ebenso wie die für die Sprachsignale, es wird lediglich für die Quantisierung des 14. Reflexionskoeffizienten ein Bit weniger verwendet.

Das decoderseitig in Blöcken ohne Sprachaktivität erzeugte Ausgangssignal entsteht nun als Ausgangssignal eines LPC-Synthesefilters, welches durch die so quantisierten LPC-Parameter bestimmt ist und welches mit einem näherungsweise weißen Rausch-Signal beaufschlagt wird. Dieses wird einem Pseudo-Rausch-Generator entnommen, welcher in einem Amplitudenbereich zwischen -1 und 1 gleichverteilte Zufallszahlen u(n) liefert, die noch mit einem Verstärkungsfaktor $\delta$ zu skalieren sind.

Im Coder wird einmal pro Unterblock ein solcher Verstärkungsfaktor bestimmt. Dies geschieht dadurch,daß die Erregungssignalenergie an einen Pegel angepaßt wird, der 3 dB unter dem Energiepegel des LPC-Restsignals r (n) liegt. Für die gleichzeitige 5-Bit-Quantisierung des Verstärkungsfaktors wird hierzu der Ausdruck

**EP 0 993 672 B1**

$$\left| \frac{\delta^2}{3} - \frac{1}{144} \sum_{n=0}^{71} r(n)^2 \right|$$

über den gesamten Vorrat von nichtlinear quantisierten Rauschverstärkungsfaktoren δ unter Verwendung einer abgespeicherten Tabelle minimiert. Die gesamte Bitrate für die Dauer der Blöcke ohne Sprachsignal beträgt damit

$$\frac{(1 + 51 + 20)\text{Bits}}{24\text{ms}} = 3.0\text{kbps} \ .$$

Die Codierung und Decodierung der Blöcke mit Sprachsignal wird im wesentlichen ebenso durchgeführt wie es oben für den Fall der konstanten Bitrate beschrieben wurde. Es gibt lediglich folgende Unterschiede:

- Die Speicherung eines Sprachaktivitätsbits für jeden Block wird dadurch ohne Änderung der Bitrate ermöglicht, daß der 14. Reflexionskoeffizient mit 1 Bit weniger codiert wird als bei der oben beschriebenen Ausführungsform mit fester Bitrate.

- Im Sprachsignalcoder und im Sprachsignaldecoder muß sichergestellt sein, daß das adaptive Codebuch lediglich Erregungsvektoren aufweist, die aus Blöcken mit Sprachsignal herrühren. Dies bedeutet, daß die Rauscherregung, die für die Codierung von Blöcken ohne Sprachsignal verwendet wird, nicht in das adaptive Codebuch integriert ist, d.h. das adaptive Codebuch wird beim Vorliegen von Blöcken ohne Sprachsignal deaktiviert bzw. eingefroren. Weiterhin müssen im Rahmen der coderseitigen Berechnungen die Filterspeicher der Gewichtungsfilter und der Synthesefilter bei jedem Übergang von Blöcken ohne Sprachsignal zu Blöcken mit Sprachsignal rückgesetzt werden.

**Bezugszeichenliste**

| | |
|---|---|
| 1 | Sprachsignalanalysator |
| 11 | Schaltung zur Gewichtung eines Eingangssignalblocks |
| 12 | Schaltung zur Berechnung einer Autokorrelationssequenz |
| 13 | Schaltung zur Berechnung von Vorhersageparametern |
| 14 | Schaltung zur Bandbreitenerweiterung |
| 15 | Schaltung zur Ermittlung von Reflexionskoeffizienten |
| 16 | Quantisierer |
| 17 | Schaltung zur Berechnung von Vorhersageparametern |

| | |
|---|---|
| 2 | Inversfilter |
| 21 | Gewichtungsschaltung |
| 22 | Synthesefilter |
| 23 | Schaltung |
| 24 | Überlagerungsschaltung |
| 25 | Synthesefilter |
| 26 | Schaltung |
| 27 | Synthesefilter |

| | |
|---|---|
| 3 | Schaltung zur Ermittlung einer Erregungssignalkomponente |

| | |
|---|---|
| 4 | Schaltung zur Ermitttung einer Mehrimpulskomponente |
| 41 | Gewichtungsschaltung |
| 42 | Synthesefilter |
| 43 | Schaltung zur Berechnung einer Autokorrelationssequenz |
| 44 | Schaltung |
| 45 | Überlagerungsschaltung |
| 46 | Synthesefilter |

| 47 | Schaltung |
|---|---|
| 48 | Synthesefilter |

| 5 | Addierer |
|---|---|
| 6 | Verzögerungsglied |

| 7 | Parameterdecoder |
|---|---|
| 71 | Tabellenspeicher |
| 72 | Tabellenspeicher |
| 73 | Berechnungsschaltung |
| 74 | Schaltung |
| 75 | Schaltung |
| 76 | Rauschgenerator |
| 77 | Multiplizierer |
| 78 | Synthesefilter |

| 8 | Schaltung zur Ermittlung eines Erregungssignals |
|---|---|
| 9 | Synthesefilter |

| $\tilde{a}$ | Koeffizienten |
|---|---|
| a | LPC-Parameter |
| AB(n) | Analyseblock |
| $a_{ltp}$ | verzögerte gewichtete Vorhersageparameter |
| amp | Vorhersageparameter |
| $a_{mpe}$ | gewichtete Vorhersageparameter |
| e | Gesamterregungssignal |
| $e_{ltp}$ | Anregungssignalkomponente |
| $e_{ltp}$ | Erregungsvektors |
| $e_{mpe}$ | Erregungsvektor |
| $e_v$ | verzögertes Gesamtanregungssignal |
| $hh_{mpe}$ | Autokorrelationssequenz |
| $h_{ltp}$ | Impulsantwort |
| $h_{mpe}$ | Impulsantwort |
| r | LPC-Restsignal |
| s | Sprachsignal |
| SB(n) | Syntheseblock |
| $t_{ltp}$ | Zielvektors |
| $t_{mpe}$ | Zielvektors |
| V | Vorverarbeitungsstufe |
| $x_{ltp}$ | gewichtetes Eingangssignal |
| $x_{mpe}$ | Ausgangssignal |
| $y_{ltp}$ | Signal |
| $y_{mpe}$ | Ausgangssignal |

**Patentansprüche**

1. Verfahren zur Codierung und/oder Decodierung von Sprachsignalen, insbesondere für digitale Diktiergeräte, wobei bei der Sprachsignalcodierung

   - eine Sprachsignalanalyse zur Ermittlung von Vorhersageparametern aus einem digitalen Sprachsignal durchgeführt wird,
   - eine Erregungssignalkomponente aus einem adaptiven Codebuch ermittelt wird, das adaptive Codebuch aus einem verzögerten Gesamterregungssignal gebildet wird,
   - eine Mehrimpulskomponente des Erregungssignals ermittelt wird,
   - diese Ermittlung durch Minimierung der Leistung der gewichtungsgefilterten Abweichung des aus dem jeweils in Erwägung gezogenen Erregungssignal resultierenden Signals vom Eingangssprachsignal ermittelt wird und
   - digitale Sprachsignale in aufeinanderfolgenden überlappenden Blöcken mit konstanter Anzahl von Abtastwerten verarbeitet werden, die für die Erregungssignalparameterbestimmung jeweils wieder in eine definierte Anzahl von Unterblöcken mit einer definierten Anzahl von Abtastwerten aufgeteilt werden,

und bei der Sprachsignaldecodierung

- eine Parameterdecodierung zur Rückgewinnung der quantisierten Übertragungsgrößen durchgeführt wird,
- die Erzeugung eines Erregungssignals aus der regenerierten Komponente aus dem adaptiven Codebuch und der regenerierten Mehrimpulskomponente erfolgt und - die Bildung des regenerierten Sprachsignals durch eine Synthesefilterung, welche das Erregungssignal und die regenerierten Vorhersageparameter verwendet, erfolgt,

**dadurch gekennzeichnet, daß**
bei der Sprachsignalcodierung

- die benachbarten Blöcke mit konstanter Anzahl von Abtastwerten sich nur geringfügig überlappen,
- die aus einer Block für Block durchgeführten Analyse des Sprachsignals zur Vorhersageparameterbestimmung resultierenden Reflexionskoeffizienten einer Skalarquantisierung mittels individuell angepaßter Quantisierertabellen unterzogen werden,
- das adaptive Codebuch, das bei der LTP-Analyse verwendet wird, aus Einträgen zusammengesetzt ist, die sich aus dem verzögerten Gesamterregungssignal ergeben und diese im ersten Unterblock jedes Blocks vollständig durchsucht werden, während in den weiteren Unterblöcken jeweils nur ein definierter Teilbereich durchsucht wird, der durch die jeweils vorangegangene Verzögerung festgelegt wird,
- die Verzögerungswerte für alle Unterblöcke gemeinsam in einem Verzögerungs-Code codiert werden, und die zugehörigen Verstärkungsfaktoren einzeln linearquantisiert werden,
- jeder für einen Unterblock ermittelte Mehrimpulserregungvektor außer einer definierten Anzahl von Impulsen nur Nullabtastwerte enthält, wobei jeweils diese Impulspositionen eines Unterblocks gemeinsam in einem Positionen-Code codiert werden und die zugehörigen Amplituden einer blockadaptiven Linearquantisierung unterzogen werden, bei der das Amplitudenbetragsmaximum nichtlinear, die normalisierten Impulsamplituden linear quantisiert werden,

und bei der Sprachsignaldecodierung

- die Parameterdecodierung mit Tabellenspeichern zur Regenerierung der quantisierten Reflexionskoeffizienten durchgeführt wird,
- bei der Parameterdecodierung die Verzögerungen für die aus dem adaptiven Codebuch erhaltenen Komponenten aus dem Verzögerungs-Code errechnet werden, wobei die Verzögerung für den ersten Unterblock eines Blocks im Bereich der Abtastperioden des verzögerten Gesamterregungssignals liegt, und die Verzögerungen für die weiteren Unterblöcke in Bereichen liegen, die durch die jeweils vorangegangene Verzögerung festgelegt sind,
- bei der Parameterdecodierung die linearquantisierten Verstärkungsfaktoren für die aus dem adaptiven Codebuch erhaltenen Komponenten des Erregungssignals errechnet oder aus einer Tabelle zurückgewonnen werden,
- bei der Parameterdecodierung die jeweiligen Impulspositionen für die Mehrimpulskomponente des Erregungssvektors eines Unterblocks errechnet werden, wobei jeweils aus dem Positionencode die Positionswerte des Unterblocks zurückgewonnen werden,
- bei der Parameterdecodierung die Impulsamplituden für die Mehrimpulskomponente des Erregungssignals eines Unterblocks ermittelt werden, wobei jeweils das nichtlinear quantisierte Blockmaximum sowie die linear quantisierten normalisierten Impulsamplituden zurückgewonnen werden, um dann die quantisierten denormaliserten Impulsamplituden des Unterblocks durch Multiplikation zu regenerieren.

2. Verfahren zur Codierung und/oder Decodierung von Sprachsignalen, insbesondere für digitale Diktiergeräte, nach Anspruch 1,
**dadurch gekennzeichnet, daß**
zur Abtastung der digitalen Sprachsignale eine Abtastfrequenz zwischen 11 und 13 kHz verwendet wird und die Anzahl von Abtastwerten eines Blockes als ein Vielfaches der Anzahl von Unterblöcken festgelegt wird.

3. Verfahren zur Codierung und/oder Decodierung von Sprachsignalen, insbesondere für digitale Diktiergeräte, nach Anspruch 2,

EP 0 993 672 B1

**dadurch gekennzeichnet, daß**

daß die Anzahl der Abtastwerte auf 288 festgelegt wird und die Anzahl der Unterblöcke auf 4 und damit die Anzahl der Abtastwerte der Unterblöcke auf 72 festgelegt wird.

**4.** Verfahren zur Codierung und/oder Decodierung von Sprachsignalen, insbesondere für digitale Diktiergeräte, nach Anspruch 1,
**dadurch gekennzeichnet, daß**
die Anzahl der Reflexionskoeffizienten auf 14 festgelegt wird und für deren Quantisierung 5, 5, 4, 4, 4, 4, 4, 4, 3, 3, 3, 3, 3 bzw. 3 oder 2 Bit benutzt werden.

**5.** Verfahren zur Codierung und/oder Decodierung von Sprachsignalen, insbesondere für digitale Diktiergeräte, nach Anspruch 1,
**dadurch gekennzeichnet, daß**
für die Erzeugung des adaptiven Codebuchs um zwischen 36 und 186 Abtastperioden verzögerte Gesamterregungssignalwerte verwendet werden, der jeweils ab dem zweiten Unterblock zu durchsuchende Teilbereich auf 48 Verzögerungswerte festgelegt wird, der Verzögerungs-Code auf eine Länge von 24 Bit festgelegt wird und die Linearquantisierung des Verstärkungsfaktors mit 5 Bit erfolgt.

**6.** Verfahren zur Codierung und/oder Decodierung von Sprachsignalen, insbesondere für digitale Diktiergeräte, nach Anspruch 1,
**dadurch gekennzeichnet, daß**
das zu codierende Sprachsignal vor der weiteren Verarbeitung einer Vorfilterung unterzogen wird, welche sehr tieffrequente Anteile unterdrückt und hochfrequente Anteile leicht betont.

**7.** Verfahren zur Codierung und/oder Decodierung von Sprachsignafen, insbesondere für digitale Diktiergeräte, nach einem oder mehreren der vorangegangenen Ansprüche,
**dadurch gekennzeichnet, daß**
die Sprachsignalanalyse zur Vorhersageparameterbestimmung auf definierte Zeitbereiche angewendet wird, die die Blöcke jeweils um eine definierte Zeitspanne in die Vergangenheit und die Zukunft überragen, so daß aufgrund der entstehenden Überlappung benachbarter Analyseabschnitte Instationaritäten des Sprachsignals in das Analyseergebnis einbezogen werden.

**8.** Verfahren zur Codierung und/oder Decodierung von Sprachsignalen, insbesondere für digitale Diktiergeräte, nach Anspruch 7,
**dadurch gekennzeichnet, daß**
die definierte Länge der Analysezeitbereiche 27 ms beträgt und die Bereiche über den Verarbeitungsblöcken zentriert sind.

**9.** Verfahren zur Codierung und/oder Decodierung von Sprachsignalen, insbesondere für digitale Diktiergeräte, nach einem oder mehreren der vorhergehenden Ansprüche,
**dadurch gekennzeichnet, daß**
die Analyseabschnitte einer Trapezfensterung mit einer Fensterflankenlänge von jeweils 14 Abtastwerten unterworfen werden, bevor eine LPC-Analyse 14. Ordnung, gemäß der Autokorrelationsmethode mit Stabilisierung, durchgeführt wird, die Vorfilterung mit einer Grenzfrequenz von 50 Hz durchgeführt wird, die skalare Quantisierung der Reflexionskoeffizienten durch einfache Minimierung des eukildischen Abstandes der unquantisierten Werte von den Einträgen jeweils einer individuell angepaßten Repräsentantentabelle durchgeführt wird, die resultierenden LPC-Parameter einer Gewichtung mit dem Faktor 0.7 unterzogen werden, um damit die LTP-Analyse zur Ermittlung einer Erregungssignalkomponente aus dem adaptiven Codebuch durchzuführen, bei der die Leistung der gewichtungsgefilterten Abweichung des aus dem jeweils betrachteten Codebucheintrag resultierenden Signals vom Eingangssprachsignal mimmiert wird und die aus der Vorhersageparameterbestimmung erhaltenen LPC-Parameter einer Gewichtung mit dem Faktor 0.9 unterzogen werden, um damit die Ermittlung einer Mehrimpulskomponente des Erregungssignals durchzuführen.

**10.** Verfahren zur Codierung und/oder Decodierung von Sprachsignalen, insbesondere für digitale Diktiergeräte, nach einem oder mehreren der vorhergehenden Ansprüche,
**dadurch gekennzeichnet,**
**daß** die Sprachsignalcodierung und/oder die Sprachsignaldecodierung mit variabler Bitrate durchgeführt wird, das Eingangssignal auf das Auftreten von Sprachpausen überwacht wird und Sprachpausen erkannt werden und bei der Sprachpausenüberwachung die Signalleistung des Eingangssignals auswertet wird, daß bei der Sprachpausenüberwachung die Signalleistung des Eingangssignals mit einem adaptiven Schwelienwert verglichen wird, daß die Auswertung der Signalleistung des Eingangssignals blockweise durchgeführt wird und eine Sprachpause dann detektiert wird, wenn die ermittelte Signalleistung in mehreren aufeinanderfolgenden Blöcken unter dem Schwellenwert liegt, daß als Kennung für das Vorliegen einer Sprachpause ein Sprachkennbit gespeichert wird und daß beim Vorliegen von Blöcken ohne Sprachsignal die empfangsseitige Erzeugung eines Erregungsvektors mittels eines Rauschgenerators durchgeführt wird.

**Claims**

1. Method of coding and/or decoding voice signals, in particular for digital dictation machines, wherein in the voice signal coding

   - a voice signal analysis is performed to determine prediction parameters from a digital voice signal,
   - an excitation signal component is determined from an adaptive codebook, the adaptive codebook being formed from a delayed total excitation signal,
   - a multipulse component of the excitation signal is determined,
   - this determination is performed by minimizing the power of the weighting-filtered deviation from the input voice signal of the signal resulting from the respective excitation signal considered, and
   - digital voice signals are processed in consecutive overlapping blocks containing a constant number of sample values that are each divided up again into a defined number of subblocks containing a defined number of sample values for the excitation signal parameter determination,

   and in the voice signal decoding

   - a parameter decoding is performed to recover the quantized transfer variables,
   - an excitation signal is generated from the regenerated component from the adaptive codebook and the regenerated multipulse component, and the regenerated voice signal is formed by a synthesis filtering that uses the excitation signal and the regenerated prediction parameters,

   **characterized in that**
   in the voice signal coding,

   - the adjacent blocks having a constant number of sampling values only overlap one another slightly,
   - the reflection coefficients resulting from an analysis, performed block by block, of the voice signal to determine prediction parameters are subjected to scaler quantization by means of individually adjusted quantization tables,
   - the adaptive codebook used in the LTP analysis is made up of entries that result from the delayed total excitation signal and these are completely searched in the first subblock of every block, whereas in the further subblocks only a defined subregion is searched in each case that is fixed by the respective preceding delay,
   - the delay values for all the subblocks are coded jointly in a delay code and the associated gain factors are linearly quantized individually,
   - each multipulse excitation vector determined for a subblock contains, in addition to a defined number of pulses, only zero sample values, these pulse positions of a subblock being coded jointly in each case in a position code and the associated amplitudes are subjected to a block-adaptive linear quantization in which the maximum amplitude value is quantized nonlinearly and the normalized pulse amplitudes are quantized linearly,

   and in the voice signal decoding

   - the parameter decoding is performed with table memories to regenerate the quantized reflection coefficients,
   - in the parameter decoding, the delays for the components obtained from the adaptive codebook are calculated from the delay code, the delay for the first subblock of a block being in the range of the sampling periods of the delayed total excitation signal and the delays for the further subblocks being in the ranges fixed by the respective preceding delay,
   - in the parameter decoding, the linearly quantized gain factors are calculated for the components of the excitation signal obtained from the adaptive codebook or are recovered from a table,
   - in the parameter decoding, the respective pulse positions are calculated for the multipulse component of the excitation vector of a subblock, the position values of the subblock being recovered in each case from the position code,

- in the parameter decoding, the pulse amplitudes are determined for the multipulse component of the excitation signal of a subblock, the nonlinearly quantized block maximum and also the linearly quantized normalized pulse amplitudes being recovered in each case in order then to regenerate the quantized denormalized pulse amplitudes of the subblock by multiplication.

2. Method of coding and/or decoding voice signals, in particular for digital dictation machines, according to Claim 1, **characterized in that**, to sample the digital voice signals, a sampling frequency between 11 and 13 kHz is used and the number of sample values in a block is fixed as a multiple of the number of subblocks.

3. Method of coding and/or decoding voice signals, in particular for digital dictation machines, according to Claim 2, **characterized in that** the number of sample values is fixed at 288 and the number of subblocks at 4, and consequently, the number of sample values in the subblocks is fixed at 72.

4. Method of coding and/or decoding voice signals, in particular for digital dictation machines, according to Claim 1, **characterized in that** the number of reflection coefficients is fixed at 14 and 5,5,4,4,4,4,4,4,3,3,3,3,3, or 3 or 2 bits, respectively, are used for their quantization.

5. Method of coding and/or decoding voice signals, in particular for digital dictation machines, according to Claim 1, **characterized in that** total excitation signal values delayed by between 36 and 186 sampling periods are used for the generation of the adaptive codebook, the subregion to be searched in each case from the second subblock onwards is fixed at 48 delay values, the delay code is fixed at a length of 24 bits and the gain factor is linearly quantized with 5 bits.

6. Method of coding and/or decoding voice signals, in particular for digital dictation machines, according to Claim 1, **characterized in that** the voice signal to be coded is subjected, prior to the further processing, to a prefiltering that suppresses very low-frequency components and slightly emphasizes high-frequency components.

7. Method of coding and/or decoding voice signals, in particular for digital dictation machines, according to one or more of the preceding claims, **characterized in that** the voice signal analysis for prediction parameter determination is applied to defined time ranges that project beyond the blocks in each case into the past and the future by a defined time interval, with the result that non-stationary states of the voice signal are included in the analysis result as a result of the occurrence of overlapping of adjacent analysis segments.

8. Method of coding and/or decoding voice signals, in particular for digital dictation machines, according to Claim 7, **characterized in that** the defined length of the analysis time ranges is 27 ms and the ranges are centred over the processing blocks.

9. Method of coding and/or decoding voice signals, in particular for digital dictation machines, according to one or more of the preceding claims, **characterized in that** the analysis segments are subjected to a trapezoidal windowing with a window edge length of 14 sample values in each case before a 14th order LPC analysis is performed in accordance with the autocorrelation method with stabilization, the prefiltering is performed with a cutoff frequency of 50 Hz, the scaler quantization of the reflection coefficients is performed by simple minimization of the euclidic spacing of the unquantized values of the entries in each case of an individually adapted table of representatives, the resultant LPC parameters are subjected to a weighting by a factor of 0.7 in order to perform therewith the LTP analysis to determine an excitation signal component from the adaptive codebook, in which analysis the power of the weighting-filtered deviation of the signal resulting from the respective considered codebook entry from the input voice signal is minimized and the LPC parameters obtained from the prediction parameter determination are subjected to a weighting by the factor 0.9 in order to perform therewith the determination of a multipulse component of the excitation signal.

10. Method of coding and/or decoding voice signals, in particular for digital dictation machines, according to one or more of the preceding claims, **characterized in that** the voice signal coding and/or the voice signal decoding is performed at variable bit rate, the input signal is monitored for the occurrence of voice pauses and voice pauses are detected and, in the voice pause monitoring, the signal power of the input signal is evaluated, **in that**, in the voice pause monitoring, the signal power of the input signal is compared with an adaptive threshold value, **in that** the evaluation of the signal power of the input signal is performed blockwise and a voice pause is detected if the signal power determined is below the threshold value in a plurality of consecutive blocks, **in that** a voice identification bit is stored as identifier for the presence of a voice pause and **in that**, if blocks without voice signal are present, the receiving-side generation of an excitation vector is performed by means of a noise generator.

## Revendications

1. Procédé de codage et/ou décodage de signaux vocaux, notamment pour des appareils de dictée numériques, selon lequel lors du codage de signaux vocaux

   - une analyse des signaux vocaux est exécutée pour déterminer des paramètres de prédiction à partir d'un signal vocal numérique,
   - une composante du signal d'excitation est déterminée à partir d'un livre de code adaptatif, et le livre de code adaptatif est formé par un signal d'excitation total retardé,
   - une composante à impulsions multiples du signal d'excitation est déterminée,
   - cette détermination est réalisée en réduisant la puissance de l'écart, filtré par pondération, entre le signal, qui résulte du signal d'excitation respectivement considéré, et le signal vocal d'entrée, et
   - des signaux vocaux numériques, sont traités dans des blocs qui se chevauchant comportant un nombre constant de valeurs d'échantillonnage et qui sont divisés à nouveau respectivement en un nombre défini de blocs secondaires comportant un nombre défini de valeurs d'échantillonnage, pour la détermination des paramètres d'excitation,

   et lors du décodage des signaux vocaux

   - un décodage des paramètres est exécuté pour récupérer les grandeurs de transmission quantifiées,
   - la production d'un signal d'excitation s'effectue à partir de la composante régénérée tirée du livre de code adaptatif et de la composante régénérée à impulsions multiples et - la formation du signal vocal régénéré s'effectue au moyen d'un filtrage de synthèse, qui utilise le signal d'excitation et les paramètres de prédiction régénérés,

   **caractérisé en ce que**
   lors du codage de signaux vocaux

   - les blocs voisins ayant un nombre constant de valeurs d'échantillonnage se chevauchent seulement légèrement,
   - les coefficients de réflexion qui résultent d'une analyse, effectuée bloc par bloc, du signal vocal pour la détermination des paramètres de prédiction, sont soumis à une quantification scalaire à l'aide de tableaux de quantification adaptés individuellement,
   - le livre de code adaptatif, qui est utilisé lors de l'analyse LTP, est assemblé à partir d'entrées, qui résultent du signal d'excitation global retardé, et une recherche complète de ces entrées est effectuée dans le premier sous-bloc de chaque bloc, tandis que dans les autres sous-blocs, une recherche est exécutée seulement dans une zone partielle définie, qui est fixée par le retard respectif précédent,
   - les valeurs de retard pour tous les sous-blocs sont codés conjointement dans un code de retardement, et les facteurs d'amplification associés sont quantifiés linéairement d'une manière individuelle,
   - chaque vecteur d'excitation à impulsions multiples, déterminé pour un sous-bloc, contient en dehors d'un nombre défini d'impulsions, uniquement des valeurs d'échantillonnage nulles, ces positions d'impulsions d'un sous-bloc étant codées dans un code de position et les amplitudes associées sont soumises à une quantification linéaire adaptative du point de vue des blocs, lors de laquelle la valeur maximale de l'amplitude est quantifiée d'une manière non linéaire et les amplitudes normalisées des impulsions sont quantifiées d'une manière linéaire,

   et lors du décodage de signaux vocaux

   - le décodage des paramètres est exécuté à l'aide de mémoire à tables pour la régénération des coefficients de réflexion modifiés,
   - lors du décodage des paramètres, les retards pour les composantes obtenues à partir du livre de code adaptatif sont calculés à partir du code de retardement, le retard pour le premier sous-bloc d'un bloc étant situé dans la gamme des périodes d'échantillonnage du signal d'excitation global retardé, et les retards pour les autres sous-blocs sont situés dans des gammes, qui sont fixées par le retard respectif précédent,

- lors du décodage des paramètres, les facteurs d'amplification quantifiés linéairement pour les composantes du signal d'excitation, obtenues à partir du livre de code adaptatif, sont calculés ou sont obtenus à partir d'un tableau,

- lors du décodage des paramètres, les positions respectives d'impulsions pour les composantes à impulsions multiples du vecteur d'excitation d'un sous-bloc sont calculées, auquel cas les valeurs de position du sous-bloc sont récupérées respectivement à partir du code de position,

- lors du décodage des paramètres, les amplitudes des impulsions pour les composantes à impulsions multiples du signal d'excitation d'un sous-bloc sont déterminées, auquel cas respectivement le maximum quantifié non linéairement de bloc ainsi que les amplitudes normalisées quantifiées linéairement d'impulsions sont récupérées pour régénérer par multiplication ensuite les amplitudes quantifiées et dénormalisées des impulsions du sous-bloc.

**2.** Procédé de codage et/ou de décodage de signaux vocaux, notamment pour des appareils numériques de dictée, selon la revendication 1, **caractérisé en ce que** pour l'échantillonnage des signaux vocaux numériques, on utilise une fréquence d'échantillonnage comprise entre 11 et 13 kHz, et le nombre des valeurs d'échantillonnage d'un bloc est fixé en tant que multiple du nombre de sous-blocs.

**3.** Procédé de codage et/ou de décodage de signaux vocaux, notamment pour des appareils de dictée numériques selon la revendication 2, **caractérisé en ce que** le nombre des valeurs d'échantillonnage est fixé à 288 et le nombre de sous-blocs est fixé à 4 et par conséquent le nombre de valeurs d'échantillonnage des sous-blocs est fixé à 72.

**4.** Procédé de codage et/ou décodage de signaux vocaux, notamment pour des appareils de dictée numériques selon la revendication 1, **caractérisé en ce que** le nombre des coefficients de réflexion est fixé à 14 et qu'on utilise pour leur quantification 5,5,4,4,4,4,4,4, 3,3,3,3,3 ou 3 ou 2 bits.

**5.** Procédé de codage et/ou décodage de signaux vocaux, notamment pour des appareils de dictée numériques selon la revendication 1, **caractérisé en ce que** pour la production du livre de codage adaptatif, on utilise des valeurs de signaux d'excitation globale, retardées d'un nombre de périodes d'échantillonnage compris entre 36 et 186 périodes d'échantillonnage, que la zone partielle, dans laquelle la recherche doit être exécutée respectivement à partir du deuxième sous-bloc, est fixée à 48 valeurs de retardement, que la longueur du code de retardement est fixée à 24 bits et que la quantification linéaire du facteur d'amplification s'effectue avec 5 bits.

**6.** Procédé de codage et/ou décodage de signaux vocaux, notamment pour des appareils de dictée numériques selon la revendication 1, **caractérisé en ce que** le signal vocal à coder est soumis, avant la poursuite du traitement, à un filtrage préalable, qui supprime des composantes à très basses fréquences et intensifie légèrement des composantes à hautes fréquences.

**7.** Procédé de codage et/ou décodage de signaux vocaux, notamment pour des appareils de dictée numériques selon une ou plusieurs des revendications précédentes, **caractérisé en ce que** l'analyse de signaux vocaux est utilisée pour la détermination de paramètres de prédiction dans des plages temporelles définies, qui débordent, respectivement d'un intervalle de temps défini, dans le passé et dans l'avenir de sorte que sur la base du chevauchement, qui apparaît, de sections d'analyse voisines, des instabilités du signal vocal sont incluses dans le résultat d'analyse.

**8.** Procédé de codage et/ou décodage de signaux vocaux, notamment pour des appareils de dictée numériques selon la revendication 7, **caractérisé en ce que** la longueur définie des plages temporelles d'analyse est égale à 27 ms et que les plages sont centrées au moyen des blocs de traitement.

**9.** Procédé de codage et/ou décodage de signaux vocaux, notamment pour des appareils de dictée numériques selon une ou plusieurs des revendications précédentes, **caractérisé en ce que** les sections d'analyse sont soumises à un fenêtrage en trapèze avec une longueur des bords de fenêtre égale respectivement à 14 valeurs d'échantillonnage, avant qu'une analyse LPC du 14-ème ordre soit exécutée conformément au procédé d'autocorrélation avec stabilisation, que le filtrage préalable est exécuté avec une fréquence limite de 50 Hz, que la quantification scalaire des coefficients de réflexion est exécutée au moyen d'une minimalisation de la distance euclidienne des valeurs non quantifiées par les entrées respectivement d'un tableau de représentants, qui est adapté individuellement, que les paramètres LPC résultants sont soumis à une pondération avec le facteur 0,7 de manière à exécuter de ce fait l'analyse LTP pour la détermination d'une composante de signal d'excitation à partir du livre de code adaptatif, analyse lors de laquelle la puissance de l'écart, filtré avec pondération, du signal résultant de l'entrée respectivement considérée du livre de code par rapport au signal vocal d'entrée est minimisée et les paramètres LPC, obtenus à partir de la détermination des paramètres de prédiction, sont soumis à une pondération avec le facteur 0,9, pour réaliser ainsi la détermination d'une composante à plusieurs impulsions du signal d'excitation.

10. Procédé de codage et/ou décodage de signaux vocaux, notamment pour des appareils de dictée numériques, selon une ou plusieurs des revendications précédentes, **caractérisé en ce que** le codage de signaux vocaux et/ou le décodage de signaux vocaux sont exécutés avec une cadence binaire variable, que l'apparition de pauses de conversation dans le signal d'entrée est contrôlée et que des pauses de conversation sont identifiées et, lors du contrôle de la présence de pauses de conversation, la puissance du signal d'entrée est évaluée, que lors du contrôle de la présence de pauses de conversation, la puissance du signal d'entrée est comparée à une valeur de seuil adaptative, que l'évaluation de la puissance du signal d'entrée est effectuée selon des blocs et qu'une pause de conversation est détectée lorsque la puissance déterminée du signal est inférieure à la valeur de seuil dans plusieurs blocs successifs, qu'un bit d'identification de conversation est mémorisé en tant qu'identification de la présence d'une pause de conversation et que dans le cas de la présence de blocs sans signal vocal, la production, côté réception, d'un vecteur d'excitation est exécutée à l'aide d'un générateur de bruit.

Fig. 1

Fig. 2

Fig. 3

Fig. 4

Fig. 5

Fig. 6